# EUROPÄISCHE PATENTSCHRIFT

(11) **EP 0 701 879 B1**
(45) Veröffentlichungstag und Bekanntmachung des Hinweises auf die Patenterteilung: **23.12.1998**
(21) Anmeldenummer: 95114086.2
(22) Anmeldetag: 08.09.1995
(51) Int. Cl.: B23Q 1/25, B25H 1/00

(54) **Montagegerät**
Assembling device
Dispositif de montage

(30) Priorität: 13.09.1994 DE 4432290
(43) Veröffentlichungstag der Anmeldung: 20.03.1996
(73) Patentinhaber: A RÖMHELD GmbH & CO KG, D-35317 Laubach 1 (DE)
(72) Erfinder: Zachau, Henning, Prof. Dr. sc.techn., D-01217 Dresden (DE); Ehrhardt, Winfried, Dr.rer.nat., D-35321 Laubach (DE); Staudenmaier, Siegfried, D-35321 Laubach (DE); Kirchner, Fritz, D-35447 Ettinghausen (DE)
(74) Vertreter: Bischof, Hans-Jochen, Dipl.-Ing.

(56) Entgegenhaltungen:
- EP-A- 0 116 212
- EP-A- 0 121 134
- DE-A- 3 043 149
- DE-A- 3 120 247
- US-A- 2 106 525
- US-A- 3 538 794

## Beschreibung

Die Erfindung bezieht sich auf ein Montagegerät zur Bearbeitung von Werkstücken auf Arbeitstischen oder Paletten, mit einem Stützelement, das von einem Montagebügel getragen wird und mit einer Werkzeugaufnahmevorrichtung für verschiedene Werkzeuge.

Es ist bekannt, Werkstücke verschiedenen Bearbeitungsgeräten zuzuführen, die jeweils für einen bestimmten Bearbeitungsvorgang ausgelegt sind. Es sind auch Bearbeitungsgeräte bekannt, die mit verschiedenen Bearbeitungsvorrichtungen bestückt sind, die durch Drehen oder Schwenken in die jeweilige Arbeitsstellung gebracht werden. Es ist auch eine Bohrvorrichtung für eine motorbetriebene Handbohrmaschine bekannt (DE 31 20 247), bei der das Werkstück und die Bohrmaschine mittels eines aus zwei Teilen bestehenden Bügels in die jeweilige Arbeitsstellung gebracht werden. Das Werkstück ist variabel zu befestigen und die Bügelteile sind ineinander schiebbar. Bei allen Geräten kommt es darauf an, daß die zu bearbeitenden Werkstücke exakt zugeführt werden und in dieser Lage festgesetzt sind.

Der Erfindung liegt die Aufgabe zugrunde, ein Montagegerät zu schaffen, das für den Einsatz verschiedener Werkzeuge geeignet ist, das ein schnelles Auswechseln bzw. Umsetzen der Werkzeuge gestattet und das sich an das jeweilige zu bearbeitende Werkstück selbsttätig in der Höhe anpaßt. Die Bearbeitungsvorgänge beziehen sich in erster Linie auf Pressen, Bohren, Fräsen, Oberflächenbehandlung, aber auch auf Prüfvorgänge.

Erfindungsgemäß wird diese Aufgabe durch die Merkmale des Anspruchs 1 gelöst.

Der Vorteil der Erfindung liegt darin, daß verschiedene Werkzeuge schnell einsatzfähig sind und daß sich die Höhenlage der Arbeitselemente auf das jeweilige Werkstück selbst ausrichtet.

Das Montagegerät wird in den Fig. näher beschrieben.

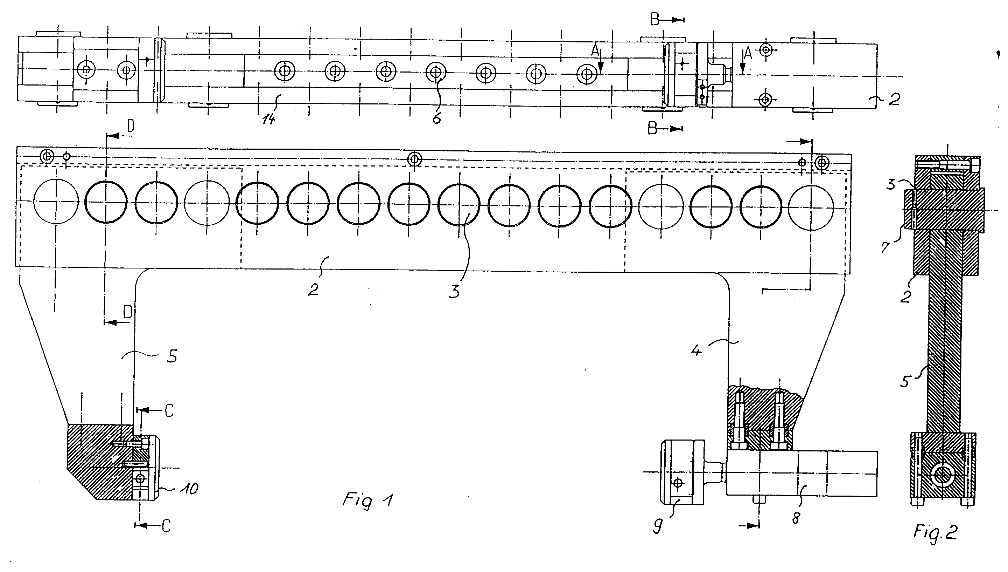

Fig. 1 zeigt den Montagebügel mit einem Bearbeitungselement und einem Stützelement
Fig. 2 zeigt eine Seitenansicht davon
Fig. 3 zeigt die Linearführung des Montagebügels

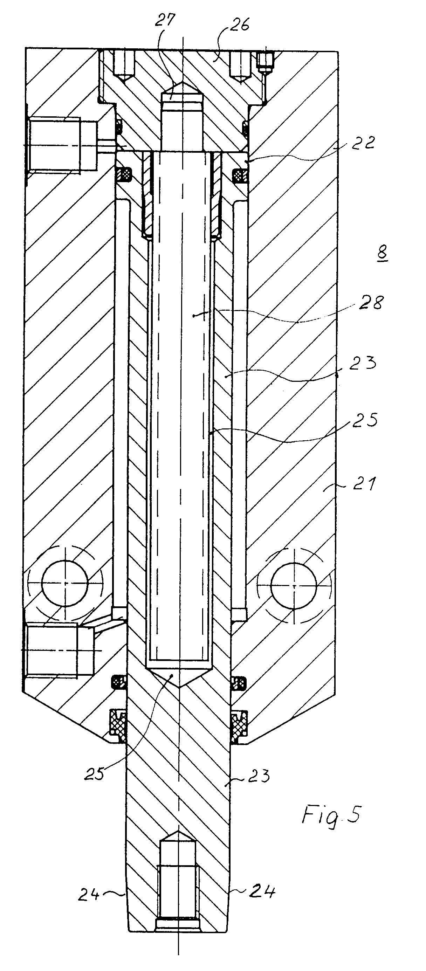

Fig. 4 zeigt die Linearführung in der Draufsicht
Fig. 5 zeigt die Werkzeugaufnahmevorrichtung und
Fig. 6 zeigt die Schnellspannvorrichtung.

Das Montagegerät ist mit einem Montagebügel 2 bestückt, der zur Aufnahme und Krafteinleitung des Bearbeitungselementes 4 und Stützelementes 5 dient.

Der Montagebügel 2 ist U-förmig ausgebildet, so daß in das offene U die Bearbeitungs-und Stützelemente eingefügt und befestigt sind. Zu diesem Zweck ist der U-förmige Montagebügel 2 an den beiden sich gegenüberliegenden Seiten des U mit einer Vielzahl von Aufnahmebohrungen 3 in möglichst engem Abstand versehen. Diese paßgenauen gegenüberliegenden Bohrungen 3 lassen sich durch Befestigungsbolzen 7 verbinden. Die Elemente 4 und 5 sind entsprechend mit gleichen Bohrungen im Bereich ihrer jeweiligen Einfügung in den U-förmigen Montagebügel 2 versehen. Damit lassen sich beliebige Abstände zwischen den Elementen 4 und 5 einstellen und die Elemente 4 und 5 lassen sich auch in ihrer Höhe über der Bearbeitungstischfläche variieren.

Darüber hinaus sind die Elemente 4 und 5 umsetzbar, d.h. durch Umkehr eines jeden Elementes läßt sich dann eine Bearbeitung im Innenbereich des Werkstückes durchführen. Entscheidend ist hierbei noch, daß der Montagebügel 2 allein für die Krafteinleitung maßgebend ist und daß die zwischen den Elementen 4 und 5 aufgebrachten Kräfte zur Bearbeitung des Werkstückes nur durch den Montagebügel getragen werden, der entsprechend angelegt ist.

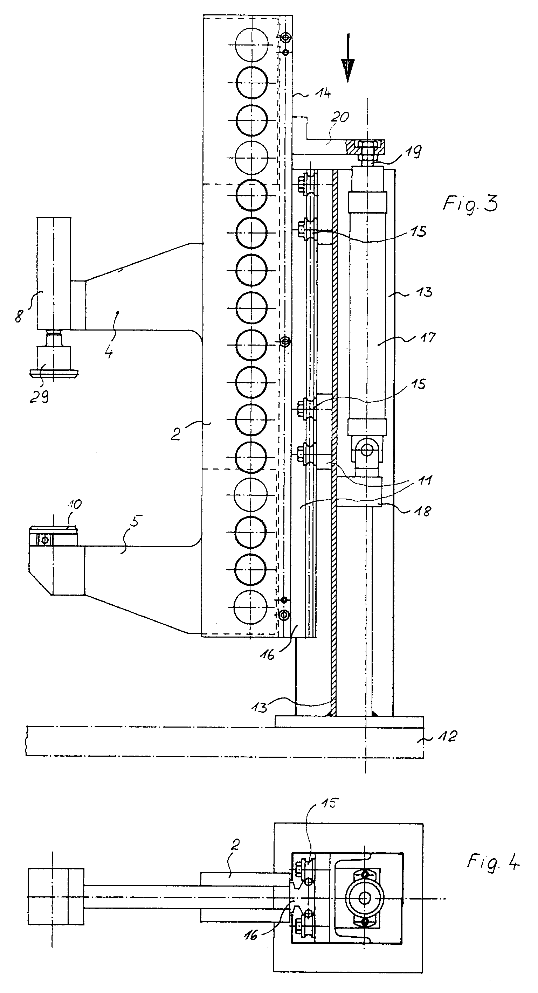

Diese Gesamtaufhängung wird gem. Fig. 3 noch verbessert durch eine Linearführung 11. Das ganze Gerät 1 wird von einer Grundplatte 12 getragen. Auf dieser Grundplatte 12 ist senkrecht ein Ständer 13 befestigt, der als Träger des Montagegerätes 1 dient.

Die Linearführung 11 ist wirksam zwischen dem Ständer 13 und dem Montagebügel 2. An dem Ständer 13 sind Rollen 15 paarweise im vorgegebenen Abstand angebracht, so daß zwischen den Rollen eine Gleitschiene 16 geführt werden kann. Diese Gleitschiene 16 ist annähernd doppel T-förmig gestaltet und im Bereich der Rollenführung sind die Kanten abgerundet diesen angepaßt. Die Gleitschiene 16 ist mit der Unterseite 14 des Montagebügels 2 über Bohrungen 6 verschraubt.

Dem Ständer 13 ist ein Zylinder 17 zugeordnet und an seinem unteren Ende fest mit dem Ständer 13 an Aufnahme 18 verbunden. Der Zylinder 17 wirkt in Längsrichtung des Ständers 13, also senkrecht. Die Kolbenstange 19 des Zylinders 17 ist über einen Mitnehmer 20 mit dem Montagebügel 2 fest verbunden. Wird der Zylinder 17 mit Druck beaufschlagt, so hebt sich die Kolbenstange 19 und über Mitnehmer 20 ebenfalls der Montagebügel 2. Dieser Montagebügel 2 wird während der Hubbewegung in der Linearführung geführt, indem die Gleitschiene 16 in den Rollen 15 gleitet.

Der Druck, der im Zylinder 17 aufzubringen ist, muß nur so groß sein, daß er gerade das Gewicht des Montagebügels einschließlich aller an diesem Bügel angebrachten Teile und Vorrichtungen überwindet. Damit wird sichergestellt, daß die Elemente 4 und 5 immer in eine Arbeitsstellung gebracht werden, bei der das Stützelement 5 am zu bearbeitenden Werkstück zur Anlage gebracht wird. Da die Bearbeitungskräfte nur zwischen den Elementen 4 und 5 einerseits und im Montagebügel 2 anderseits wirksam sind, entstehen keine weiteren Kräfte, die auf das Werkstück negativ einwirken könnten.

Durch diese Anordnung ist eine schwimmende Werkstückaufnahme seitens der Bearbeitungselemente erzielt.

In der gezeigten Ausführung ist das Bearbeitungselement 4 als ein Zug-und Druckelement dargestellt. Es dient z.B. zum Pressen und Lösen. Stattdessen können beliebige andere Arbeitselemente zum Einsatz kommen, wie Bohrwerkzeuge, Drehwerkzeuge, Schleifwerkzeuge u. dergl. Entscheidend ist, daß alle diese Werkzeuge schnell und sicher auswechselbar sind. Zu diesem Zweck ist das Montagegerät erfindungsgemäß mit einer Werkzeugaufnahmevorrichtung 8 bestückt.

Diese Werkzeugaufnahmevorrichtung erfüllt mehrere Aufgaben. Zum einen soll ein rasches Wechseln von Werkzeugen ermöglicht werden, zu anderen sollen die Werkzeuge drehsicher eingebracht sein und schließlich soll die Kraftschlüssigkeit erhöht werden.

Die Werkzeugaufnahmevorrichtung 8 besteht aus einem Zylindergehäuse 21 in dem ein Kolben 22 mit Kolbenstange 23 geführt ist. Die Kolbenstange 23 ist zur Werkzeugaufnahme im Werkzeugbefestigungsbereich 24 konisch verjüngt. Damit wird bei Werkzeugaufnahme der mit konischer Bohrung versehenen Werkzeuge ein fester Sitz gewährleistet.

Die Kolbenstange 23 ist in ihrem Inneren hohl ausgebildet. Dieser Hohlraum 25 kann vielseitig gestaltet werden, z.B. als Dreikant oder Vielkant oder mit ovalem Querschnitt oder auch vielkeilförmig.

Das Fußteil 26 des Zylindergehäuses 21 ist als Abschlußteil ausgebildet und gleichzeitig mit einer Preßbohrung 27 versehen, in die eine Führungsstange 28 eingepreßt ist. Diese Führungsstange 28 ist innerhalb des Hohlraumes 25 geführt, so daß die Kolbenstange 23 auf der Führungsstange 28 im Zylindergehäuse 21 gleitet. Entsprechend der Hohlraumgestaltung des Hohlraumes 25 muß auch die Gestaltung der Führungsstange 28 sein. Dadurch wird die Führung der Kolbenstange 23 in ihrer Lage bestimmt, d.h. die Kolbenstange 23 gleitet drehsicher auf der Führungsstange 28.

Für die Werkzeugaufnahme ist die Kolbenstange 23 mit ihrem konischen Werkzeugbefestigungsbereich 24 bestimmt. Wenn es häufig vorkommt, daß die Werkzeuge gewechselt werden müssen, ist eine Schnellspannvorrichtung erforderlich, die auf der Kolbenstange 23 verbleibt und ihrerseits die einzelnen Werkzeuge aufnimmt.

Hierfür kann eine Schnellspannkupplung 29 vorgesehen werden. Die Schnellspannkupplung 29 hat eine konische Bohrung 30, mit der sie auf die Kolbenstange 23 aufgebracht wird. Zu Werkzeugaufnahme dient ein Kugelring 31, auf dessen Umfang im Innern eine Reihe von Kugeln 32 in entsprechender Aufnahme angeordnet sind. Dieser Kugelring ist gleitend im Gehäuse 33 der Schnellspannkupplung eingelassen, so daß er in einem bestimmten Bereich axial in Pfeilrichtung verschiebbar ist. Durch diese Verschiebung werden die Kugeln innerhalb des Ringes bewegt. Die Kugeln 32 sind im Kugelring 31 in Bohrungen 34 geführt und stützen sich am Gehäuse 33 ab. Das Gehäuse 33 hat im Innern eine umlaufende Nut 35, in der die Kugeln 32 aufnehmbar sind.

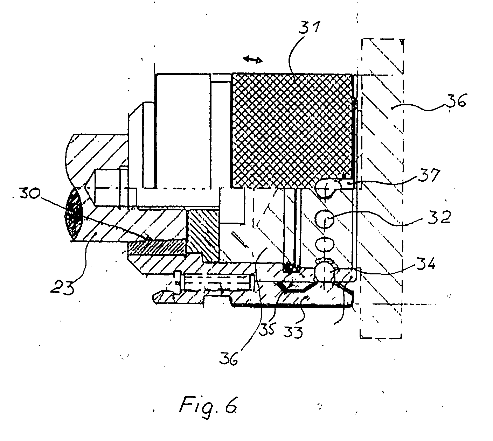

In seiner Arbeitsstellung sitzt der Kugelring 31 in der in der Fig. 6 gezeigten Stellung. Die Kugeln liegen an der Innenfläche des Gehäuses 33 und drücken sich durch die Bohrungen 34 hindurch ohne aus dieser Bohrung austreten zu können. Ein eigeführtes Werkzeug 36, das mit einer umlaufenden Nut im Bereich des Kugelringes versehen ist, wird somit in seiner Lage unverrückbar festgehalten, da die Kugeln in seine Nut eingreifen. Wird der Kugelring 31 jedoch verschoben (s. Pfeilrichtung Fig. 6), so werden die Kugeln in die Nut 35 des Gehäuses 33 gedrückt und gelangen damit aus dem Wirkungsbereich des eingebrachten Werkzeuges, das nun entnommen werden kann.

Die Werkzeugaufnahme auf der Kolbenstange 23 soll so erfolgen, daß sie verdrehungssicher ist. Dazu ist, wie beschrieben, die Kolbenstange 23 verdrehungssicher im Zylindergehäuse 21 eingebracht. Diese Sicherung gilt auch für die aufgebrachte Schnellspannkupplung 29, nicht jedoch so ohne weiteres für die darin aufgenommenen Werkzeuge. Um diese Werkzeuge 36 in der Schnellspannkupplung 29 ebenfalls drehsicher zu machen, ist in der Schnellspannkupplung 29 im Innern, d.h. in der Wandung an der das eingebrachte Werkzeug anliegt, eine Längsnut 37 axial eingefräst.

Jedes Werkzeug erhält zusätzlich einen Stift, der aus dem Aufnahmeschaft herausragt und die Dicke besitzt, die der Längsnut entspricht. Das Werkzeug wird beim Einführen in die Schnellspannkupplung 29 mit seinem Stift in der Längsnut 37 geführt. Damit ist das Werkzeug verdrehungssicher eingebracht.

## Patentansprüche

1. Montagegerät zur Bearbeitung von Werkstücken auf Arbeitstischen oder Paletten, mit einem Stützelement, das von einem Montagebügel getragen wird und mit einer Werkzeugaufnahmevorrichtung für verschiedene Werkzeuge, ***dadurch gekennzeichnet***, daß der Montagebügel (2) U-förmig ausgebildet ist und in den beiden gegenüberliegenden Seiten des U in kurzen Abständen Bohrungen (3) eingebracht sind, zur Befestigung von Bearbeitungs- und Stützelementen (4 u. 5), die in den Montagebügel eingeführt und in ihrem Abstand zueinander in den Bohrungen (3) variierbar und positionierbar sind, daß der Montagebügel (2) über eine Linearführung (11) an einem auf einer Grundplatte (12) fest montierten Ständer (13) beweglich befestigt ist und daß dem Bearbeitungselement (4) eine verdrehungssichere Werkzeugaufnahmevorrichtung (8) zugeordnet ist.

2. Montagegerät nach Anspruch 1, ***dadurch gekennzeichnet***, daß die Bearbeitungs- und Stützelemente (4 und 5) umsetzbar und richtungsumkehrbar sind.

3. Montagegerät nach Anspruch 1, ***dadurch gekennzeichnet***, daß dem Bearbeitungselement (4) eine Werkzeugaufnahmevorrichtung zugeordnet ist, deren Kolbenstange (23) einen Hohlraum (25) aufweist und daß innerhalb dieses Hohlraumes (25) eine Führungsstange (28) liegt, die im Fußteil (26) des Zylindergehäuses (21) befestigt ist.

4. Montagegerät nach Anspruch 3, ***dadurch gekennzeichnet***, daß der Hohlraum (25) und die Führungsstange (28) ein Profil besitzen, durch das jede Drehbewegung sicher vermieden ist.

5. Montagegerät nach Anspruch 4, ***dadurch gekennzeichnet***, daß die Kolbenstange (23) an ihrem der Werkzeugaufnahme dienenden Ende leicht konisch verjüngt ist.

6. Montagegerät nach Anspruch 1 bis 5, ***dadurch gekennzeichnet***, daß der Werkzeugaufnahmevorrichtung (8) eine Schnellspannkupplung (29) zugeordnet ist, die einen Kugelring (31) aufweist, dessen Kugeln (32) durch Ringverschiebung aus ihre Arbeitsebene bringbar sind und daß im Einführbereich des Werkzeuges eine Längsnut (37) eingebracht ist, in der ein dem Werkzeugschaft zugeordneter Stift gleitet, und das Werkzeug verdrehungssicher festsetzt.

7. Montagegerät nach Anspruch 1, ***dadurch gekennzeichnet***, daß die Linearführung aus einer Gleitschiene (16) besteht, die fest mit dem Montagebügel (2) verbunden ist und die zwischen paarweise angeordneten Rollen (15) gleitet und daß die Rollen (15) fest am Ständer (13) angebracht sind.

8. Montagegerät nach Anspruch 7, ***dadurch gekennzeichnet***, daß an dem Ständer (13) ein Zylinder (17) in einem Aufnahmepunkt befestigt ist, dessen Kolbenstange (19) über einen Mitnehmer (20) an dem Montagebügel (2) angebracht ist, so daß bei Druckbeaufschlagung über das Linearführungssystem der Montagebügel (2) und damit die Elemente (4 und 5) hebbar sind.

9. Montagegerät nach Anspruch 8, ***dadurch gekennzeichnet***, daß die in den Zylinder (17) einzuleitende Kraft etwas über der Kraft liegt, die notwendig ist, das Gewicht des Montagebügels (2) mit seinen Elementen (4 und 5) und anderen Teilen zu überwinden.

## Claims

1. Assembling device for machining workpieces on workbenches or pallets, comprising a supporting element carried by a mounting bracket and a tool carrier device for different tools, ***characterized in*** that said mounting bracket (2) has a U-shaped configuration and that bores (3) are machined at narrow spacings into the two opposite sides of said U-element for fastening machining and supporting elements (4 and 5) which are introduced into said mounting bracket and may be varied in terms of their mutual spacing and positioned in said bores (3), that said mounting bracket is fastened on a column (13), which is fixedly mounted on a base plate (12) for movement via a linear guiding system (11), and that a tool carrier device (8) safely held to prevent rotation is associated with said machining element (4).

2. Assembling device according to Claim 1, ***characterized in*** that said machining and supporting elements (4 and 5) are adapted to be transposed and inverted in terms of their direction.

3. Assembling device according to Claim 1, ***characterized in*** that a tool carrier device is associated with said machining element (4), which has a piston rod (23) including a cavity (25), and that a guiding rod (28) is disposed inside said cavity (25), which is fastened in the base part (26) of the cylindrical housing.

4. Assembling device according to Claim 3, ***characterized in*** that said cavity (25) and said guiding bar (28) present a profile for safely avoiding any rotational movement.

5. Assembling device according to Claim 4, ***characterized in*** that said piston rod (23) presents a slight conical taper on its end serving to carry the tool.

6. Assembling device according to Claims 1 to 5, ***characterized in*** that a quick-acting clamping attachment (29) is associated with said tool carrier device (8), which includes a ball ring (31) with balls (32) which may be carried by ring displacement out of their operating plane, and that a longitudinal groove (37) is machined into the tool insertion zone, in which groove a pin is slidingly disposed which is associated with the tool shaft and which locks the tool so as to prevent rotation.

7. Assembling device according to Claim 1, ***characterized in*** that said linear guide system consists of a sliding bar (16) fixedly connected to said mounting bracket (2) and sliding between rollers (15) disposed in pairs, and that said rollers (15) are fixedly mounted on said column (13).

8. Assembling device according to Claim 7, ***characterized in*** that on said column (13) a cylinder (17) is mounted at a point of accommodation and has a piston rod (19) which is attached via a driver (20) on said mounting bracket (2) so that upon application of a pressure via said linear guiding system said mounting bracket (2), and along with it said elements (4 and 5), may be raised.

9. Assembling device according to Claim 8, ***characterized in*** that the force to be introduced into said cylinder (17) is slightly greater than the fore required to overcome the weight of said mounting bracket (2) with its elements (4 and 5) and other parts.

## Revendications

1. Dispositif de montage à usiner des pièces d'oeuvre sur des bancs ou des palettes, comprenant un élément de support porté par une traverse de montage et un dispositif de raccordement d'outil pour outils différents, ***caractérisé en ce*** que ladite traverse de montage (2) a une configuration en U et que des alésages (3) sont formés, aux courtes distances, dans les deux côtés opposés dudit élément en U afin de fixer des éléments d'usinage et de (4 et 5) qui sont introduites dans ladite traverse de montage et sont aptes à être variés en leurs écarts mutuels et positionnés dans lesdits alésage, en ce que ladite traverse de montage est fixée sur une colonne (13) qui est rigidement montée sur une plaque de montage (12) pour un mouvement via un système de guidage linéaire (11), et en ce qu'un dispositif de raccordement d'outil (8), qui est fixé de façon à empêcher tout mouvement rotatoire, est affecté audit élément d'usinage (4).

2. Dispositif de montage selon la revendication 1, ***caractérisé en ce*** que lesdits éléments d'usinage et de support (4 et 5) sont aptes à être déplacés et renversés en leur orientation.

3. Dispositif de montage selon la revendication 1, ***caractérisé en ce*** qu'un dispositif de raccordement d'outil est affecté audit élément d'usinage (4), qui comprend une tige de piston (23) renfermant un creux (25), et en ce qu'une barre conductrice (28) est disposée à l'intérieur dudit creux (25), qui est fixée dans la base (26) du carter cylindrique.

4. Dispositif de montage selon la revendication 3, ***caractérisé en ce*** que ledit creux (25) et ladite barre conductrice (28) ont un profil tel que tout mouvement rotatoire soit sûrement empêché.

5. Dispositif de montage selon la revendication 4, ***caractérisé en ce*** que ladite tige de piston (23) est légèrement en cône à son extrémité qui sert à raccorder l'outil.

6. Dispositif de montage selon les revendications 1 à 5, ***caractérisé en ce*** qu'un coupleur à serrage rapide (29) est affecté audit dispositif de raccordement d'outil (8), qui comprend un anneau de roulement à billes (31) avec des billes (32) qui sont aptes à être déplacées, par déplacement de l'anneau, en dehors de leur plan de service, et en ce qu'une rainure longitudinale (37) est ménagée dans la zone d'introduction d'outil, à une cheville étant disposée à glissement dans ladite rainure et étant affecté à la tige d'outil et arrêtant l'outil de façon à empêcher toute rotation.

7. Dispositif de montage selon la revendication 1, ***caractérisé en ce*** que ledit système de guidage linéaire consiste en une coulisse (16) rigidement reliée à ladite traverse de montage (2) et glissant entre des galets (15) disposés en paires, et en ce que lesdits galets (15) sont rigidement montés sur ladite colonne (13).

8. Dispositif de montage selon la revendication 7, ***caractérisé en ce*** qu'un cylindre (17) est monté sur ladite colonne (13) à un point de raccordement, et présente une tige de piston (19) fixée via un entraineur (20) sur ladite traverse de montage (2) de façon qu'après la sollicitation en compression via ledit système de guidage linéaire il est possible de lever ladite traverse de montage (2), et ensemble avec lui lesdits éléments (4 et 5).

9. Dispositif de montage selon la revendication 8, ***caractérisé en ce*** que l'effort à introduire dans ledit cylindre (17) est un peu plus grand que l'effort requis à dépasser le poids de ladite (2) traverse de montage avec ses éléments (4 et 5) et des autres pièces.
